(19) Europäisches Patentamt

European Patent Office

Office européen des brevets

(11) Publication number: **0 441 068 B1**

## (12) EUROPEAN PATENT SPECIFICATION

(45) Date of publication of patent specification: **17.05.95**  (51) Int. Cl.⁶: **C08L 9/00**, C08K 5/01, A43B 13/04

(21) Application number: **90314470.7**

(22) Date of filing: **31.12.90**

(54) **Improvements in and relating to elastomers.**

(30) Priority: **09.02.90 GB 9002995**

(43) Date of publication of application:
**14.08.91 Bulletin 91/33**

(45) Publication of the grant of the patent:
**17.05.95 Bulletin 95/20**

(84) Designated Contracting States:
**DE DK FR GB IT**

(56) References cited:
**EP-A- 0 065 476**

**DATABASE WPIL, accession no. 75-56272W
[34], Derwent Publications Ltd, London,GB; &
JP-A-50 013 434**

**CHEMICAL PATENTS INDEX, BASIC AB-
STRACTS JOURNAL, section A, week 8652,
25thFebruary 1987, class A0577, accession
no. 86-342295/52, Derwent PublicationsLtd,
London, GB; & JP-A-61 255 601**

(73) Proprietor: **BANPAN RESEARCH LABORATO-
RY CO. LTD.**
**611/40 Soi Watchan Nai (Rajuthit 2),
Bangklo Yannawa**

**Bangkok 10120 (TH)**

(72) Inventor: **Santiyanont, Kiartchai**
**657/68 Mooban Preecha,
3 Patanakarn Rd,
Suan Luang
Pravet District,
Bangkok 10250 (TH)**
Inventor: **Chokwatana, Narong**
**2 Soi 56,
Sukhumvit Road,
Bangchak
Prakanong,
Bangkok 10110 (TH)**
Inventor: **Boonjawat, Jariya**
**41 Soi 6,
Watananiwate
Suthisarn Road,
Bangkok 10310 (TH)**

(74) Representative: **Rackham, Anthony Charles et
al
Lloyd Wise, Tregear & Co.
Norman House
105-109 Strand
London WC2R 0AE (GB)**

## Description

This invention relates to elastomers and in particular a polyisoprene elastomer which has use in the construction of footwear and in particular inserts such as insoles and midsoles for footwear.

Known elastomers for cushioning shock include polyurethane elastomers and ethylene vinyl acetate polymers. United States Patent No. 4,346,205 shows a typical example of a polyurethane. It has a low hardness and low compression set but a slow recovery after compression which makes it less than ideal for use as an insert in footwear.

It is therefore an object of the invention to provide a non-polyurethane elastomer which is highly suitable for use in making inserts in footwear.

According to the invention there is provided a polyisoprene elastomer in which the polyisoprene content has an average molecular weight of 15,000 to 70,000, and in which the polyisoprene has been cross-linked with an unsaturated aromatic compound cross-linking agent and cured with a sulphur curing system or a peroxide curing system, the resulting elastomer having a low compression set of 0 to 5%, and a low durometer as measured in the Shore A scale of 0 to 20.

An insole/midsole component can be constructed from such an elastomer to have a required hardness, compression set and a required percentage rebound resilience at constant thickness by varying the degree of cross-linking. In consequence, different insole/midsole components can provide a variable yet large range of cushioning effects, which is necessary for potential users of the footwear having different body weight ranges, and also for use in different sports activities. The polyisoprene elastomer of the invention is fully cured and so its properties remain consistent with time.

This is in contrast with prior art footwear where the thickness and volume of an insole component for footwear is limited by the design and size of the footwear, and material for the insole component has to be chosen for the specific cushioning requirement of that particular piece of footwear. In U.S. Patent Nos. 900,867, 1,069,001, 1,304,915, 1,514,468, 1,869,257, 2,080,469, 2,645,865, 2,677,906, 3,469,576, 4,183,156 and 4,451,994, arrangements are described for providing comfortable support in footwear, and in particular fluid (i.e. liquid or gas) filled insoles. In U.S. Patent No. 2,055,077 a sponge rubber insole is disclosed, while in U.S. Patent No. 4,451,994 a sponge rubber insole component with air spaces is described. In all these arrangements, there are difficulties in the manufacturing of such insoles, because the insoles are complicated in design, and it has also been found that any one of the above types of insoles is only useful for a very limited range of body weight of potential users for the footwear.

Suitably, the elastomer of the invention is moulded in the shape of the required insole component. The very soft and almost flowable nature of the elastomer provides even distribution of forces exerted on the forefoot portion and the heel portion of the insole.

The unsaturated aromatic compound can be an aromatic alkenyl compound and an example is a di-vinyl compound such as di-vinyl benzene.

The sulphur curing system can be one based on sulphur or a sulphur yielding material such as tetramethyl thiuram disulphide, or a conventional accelerator of sulphur vulcanisation.

Suitably, the insole/midsole component absorbs and attenuates shock forces experienced during walking, running or jumping. In particular, different body weights of users and different sports activities require different degrees of shock absorption and dissipation and the nature of the elastomer can be adapted accordingly. Such advantageously give more uniform and even distribution of the forces exerted on the forefoot portion and the heel portion, thereby increasing comfort whilst reducing the tendency of the footwear to produce foot and leg injuries. Another advantage of the invention is that a range of insole/midsole components can be provided having shock-absorbing and attenuating qualities, which components each cover a large range of potential footwear user body weights, and a range of different sport activities or casual walking.

An insole/midsole component made from an elastomer according to the invention is particularly useful for dress shoes and sport shoes of all types, and in particular is suitable for different body weight ranges of potential users.

A further advantage of the invention, is that an insole/midsole component made from an elastomer according to the invention is relatively simple in design, and little modification to existing footwear is required.

The invention will now be described, by way of example, with reference to the accompanying drawings, in which:

Figure 1A and 1B are a perspective view and an exploded view of a ladies dress shoe using an insole/midsole component made from an elastomer in accordance with the invention;

Figure 2 shows a perspective view of a running shoe using an insole/midsole component in accordance with the invention;

Figure 3 shows a further embodiment of footwear using an insole/midsole component in accordance with the invention; and

Figures 4 and 5 show insertable sock liners for footwear incorporating full length shock absorbing pads made of an elastomer according to the invention.

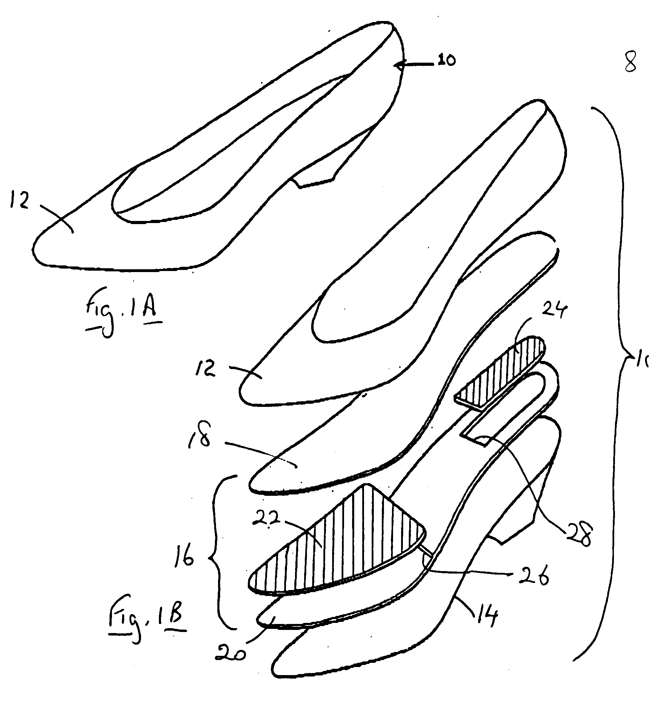

In Figures 1A and 1B the dress shoe 10 is shown having a vamp portion 12 and a sole portion 14.

An insole portion 16 is also provided which comprises an upper interlayer 18 and a lower interlayer 20. Sandwiched between these are two shock-absorbing insole pads 22 and 24 which are positioned in recesses 26 and 28, respectively, at the forefoot and heel ends of the lower interlayer 20. These insole pads 22 and 24 are made of elastomer according to the invention such as Specimen A referred to in Table 2 below.

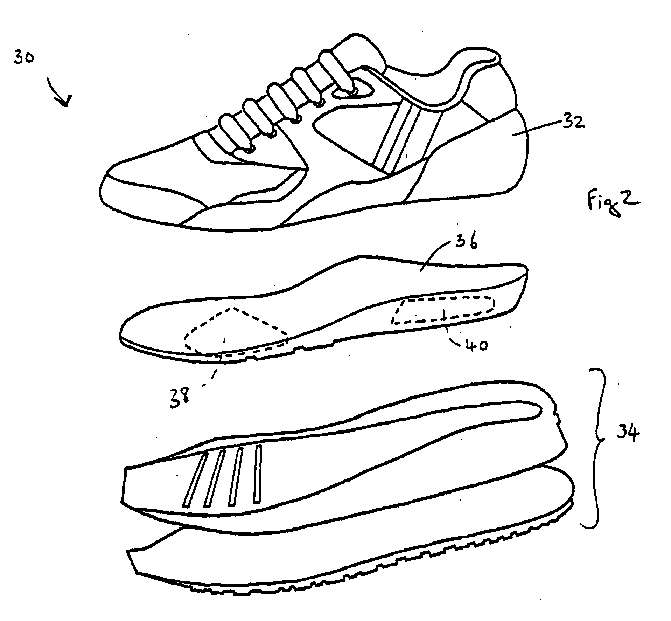

In Figure 2, a running shoe 30 is shown having an upper or vamp portion 32, and a two-part sole portion 34 on which an insole or midsole portion 36 rests.

The insole/midsole portion 36 is provided with two recesses 38 and 40 in the lower portion thereof, namely at the forefoot and heel ends thereof, and in which pads of the polyisoprene elastomer according to the invention are provided.

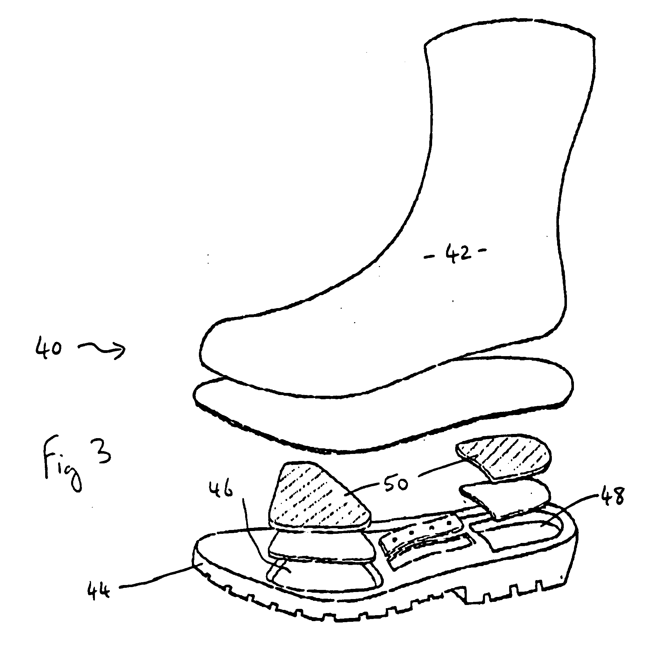

In Figure 3 a boot 40 is shown having a vamp portion 42, and a sole portion 44.

The upper surface of the sole portion 44 is provided with recesses 46 and 48 in the forefoot and heel ends thereof, within which resilient cushioning material in the form of pads 50 of a low molecular weight polyisoprene elastomer according to the invention are provided.

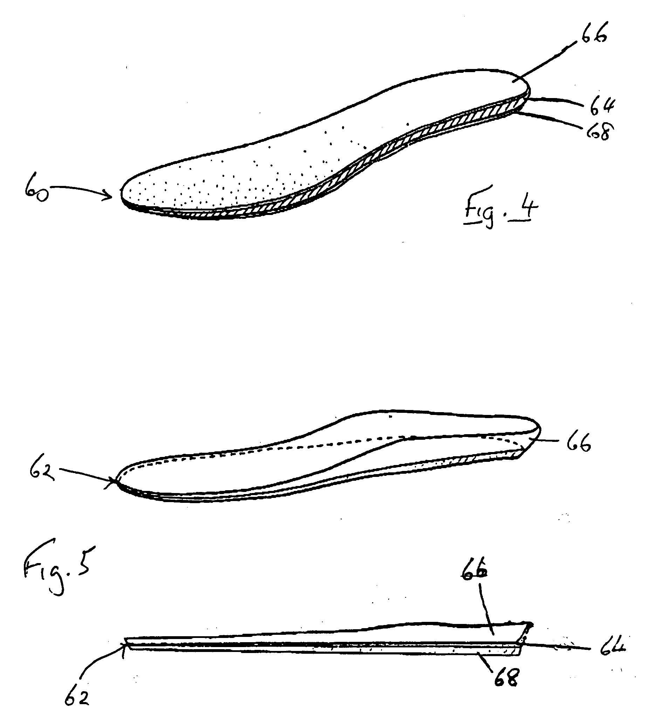

Figures 4 and 5 show two forms of insertable full-length sock liners 60 and 62 where a shock absorbing member 64, made from elastomer according to the invention, is sandwiched between an upper fabric member 66 and a lower insole member 68. Such liners 60 and 62 can be used in any conventional shoe.

The elastomer pads provided in the footwear or liners shown in Figures 1 to 5 have a thickness in the range of 2 to 6mm (the heel pad suitably being 3mm while the toe pad is suitably 2mm), a durometer (Shore A) ranging from 0 to 20, and a compression set less than 5%, and are constructed to absorb and attenuate the anticipated shock forces experienced during use of the footwear, depending on the body weight of the user and the activity being conducted by the user (which give different degrees of shock absorption). The elastomer pads are constructed to give even distribution of the forces exerted on the forefoot and heel portions of the footwear, thereby increasing comfort and stability, while reducing the possibility of foot and leg injuries.

Figures 1 to 3 show simplified embodiments of footwear, and it will be appreciated that the polyisoprene elastomer pads can be provided in footwear having a plurality of insole and/or midsole portions, and indeed in footwear having no midsole portion. Also in place of two pads as shown in Figures 1 to 3, a single pad of elastomeric material extending from the forefoot to the heel may be provided.

A preferred method of manufacturing the polyisoprene elastomer of the invention for use in these pads in footwear is to mould a mixture which typically consists of the components listed in the following Table 1.

## Table 1

| Component | Parts by weight |
|---|---|
| Liquid polyisoprene rubber[1] | 100 |
| Filler[2] | 40-80 |
| Petroleum plasticizer[3] | 40-80 |
| Petroleum resin[4] | 3-8 |
| Dye[5] | 2-5 |
| Zinc isopropyl xanthate | 2-6 |
| Zinc salt of 2-mercaptobenzothiazole | 2-6 |
| Zinc oxide | 3-5 |
| Sulphur | 1-5 |
| Divinyl benzene | 1-3 |
| Phenol-based antioxidant[6] | 0.5-2 |
| Stearic acid | 0.5-2 |

1    Typical liquid isoprene rubbers which can be used are those obtainable from Kuraray Isoprene Chemical Co Ltd under the trade name Kuraray Liquid IR. Particular rubbers are those known as LIR-50 and LIR-30, LIR-50 being preferred. General properties of LIR-30 and LIR-50 are as follows:

|  | LIR-30 | LIR-50 |
| --- | --- | --- |
| Molecular weight | 29000 | 47000 |
| Specific gravity | 0.91 | 0.91 |
| Melt viscosity (poise at 38°C) | 740 | 4800 |
| Solution viscosity (cps T.S.C. = 20%) solvent = toluene) | 12 | 29 |
| Volatile, wt% | 0.45 | 0.45 |
| Functional Groups | - | - |
| Number of Moles of functional groups (in one molecule of LIR) | - | - |
| Indene value (g/100) | 368 | 368 |

2    Suitable fillers are silicon dioxide or calcium carbonate.

3    A suitable petroleum plasticizer is that available from the Shell Company of Thailand Limited under the trade name Rubber Oil BR. This is a highly refined base stock. The oil has a relatively low viscosity.

4    A suitable petroleum resin is Coumarone Resin available from Nittetsu Chemical Company, Japan. The resin is a polymer consisting mainly of styrene, coumarone and indene.

5    A typical dye is Green FG-9000 available from UK Seung Chemical Co Ltd of Pusan, Korea.

6    A suitable antioxidant is Permanax WSL, a methylcyclohexyl derivative of selected xylenols, available from Vulnax International Ltd. or Cook Chemical Company.

To prepare the mixture, the filler and plasticizer are first mixed and then homogeneously mixed with the zinc isopropyl xanthate, the zinc salt, zinc oxide, sulphur, divinyl benzene, the antioxidant and the stearic acid. Separately the liquid polyisoprene rubber and the dye are well kneaded and the prepared mixture of the other components is added. The resulting viscous mixture is masticated for about one hour. The cross-linking reaction is then effected in a stainless steel mould by raising the curing temperature to 120 to 125°C for about one hour.

The physical properties of one resulting cross-linked liquid rubber according to the invention, Specimen A, are summarized in the following Table 2. The maintenance of low hardness and low compression set is to be noted. The precise formulation of Specimen A was as follows:

| Component | Parts by Weight |
|---|---|
| Liquid polyisoprene rubber (LIB-30) | 100.0 |
| Calcium carbonate | 48.0 |
| Petroleum plasticizer | 50.0 |
| Petroleum resin | 5.0 |
| Dye | 3.0 |
| Zinc isopropyl xanthate | 3.5 |
| Zinc salt of 2-mercaptobenzothiazol | 2.5 |
| Sulphur | 0.9 |
| Divinyl benzene | 1.0 |
| Phenol-based antioxidant | 1.0 |
| Stearic acid | 1.0 |

## Table 2

| Physical property | Unit | Specimen A |
|---|---|---|
| Hardness | Shore A | 1 |
| Hardness | Shore C | 12 |
| Shrinkage 70°C,40 min | % | 0 |
| Elongation at break | % | 887 |
| Tensile strength | $kg/cm^2$ | 0.69 |
| Tear strength | $kg/cm$ | 0.71 |
| Density | $g/cm^3$ | 1.03 |
| Compression set (at 50°C for 5h) | % | 0 |
| Impact energy return (47g ball at 153 cm) | % | 0.6 |

The shock absorbing properties and energy return of three Specimens A to C, of polyisoprene elastomers according to the invention were investigated by the Dunlop tripsometer (BS 903) pendulum rebound test at 20°C with an angle drop of 40° and sample thickness of 4mm. In the following Table 3 the three specimens A to C are compared with various known elastomers.

It will be noted that the impact absorbing properties of the specimens according to the invention with very low hardness appeared as "dead", i.e. no significant rebound at all.

Table 3

| Material | Hardness Shore A | Hardness Shore C | Rebound Resilience (%) |
|---|---|---|---|
| Specimen A | 1 | 12 | 0 |
| Specimen B | 2 | 15 | 0 |
| Specimen C | 3-4 | 21 | 22.5 |
| Polyurethane | 12-13 | 36 | 7.3 |
| EVA | 17 | 33 | 27.8 |
| EVA | 20 | 35 | 54.4 |
| Natural rubber | 58 | 82 | 86.7 |

In the above Table 3, the polyurethane was that available under the Trade Mark Sorbothane. The EVA samples were ethylene vinyl acetate polymers typically available as sock liners for footwear, whilst the natural rubber is that available according to American Chemical standard.

Specimens A to C differed in the amounts of sulphur used in curing the elastomer, the other components remaining as set out in Table 1.

Table 4

| Specimen | Sulphur (parts/100 parts by weight of polyisoprene | Hardness (Shore A) |
|---|---|---|
| A | | 1 |
| B | 2.7 | 2 |
| C | 4.0 | 3-4 |

As can be seen the hardness can be varied by varying the amount of the sulphur curing agent. As an alternative, hardness can be varied in a limited range by varying the amounts of the zinc isopropyl xanthate and/or the filler.

**Claims**

1. A polyisoprene elastomer in which the polyisoprene content has an average molecular weight of 15,000 to 70,000, and in which the polyisoprene has been cross-linked with an unsaturated aromatic compound cross-linking agent and cured with a sulphur curing system or a peroxide curing system, the resulting elastomer having a low compression set of 0 to 5%, and a low durometer as measured on the Shore A scale of 0 to 20.

2. An elastomer as claimed in Claim 1 in which the polyisoprene has an average molecular weight of 25,000 to 50,000.

3. An elastomer as claimed in Claim 1 or Claim 2 in which the unsaturated aromatic compound is an aromatic alkenyl compound.

4. An elastomer as claimed in Claim 3 in which the unsaturated aromatic compound is a di-vinyl compound.

5. An elastomer as claimed in Claim 4 in which the unsaturated aromatic compound is di-vinyl benzene.

6. An elastomer as claimed in any preceding claim which comprises the following components:

| Component | Parts by weight |
|---|---|
| Liquid polyisoprene rubber | 100 |
| Filler | 40-80 |
| Petroleum plasticizer | 40-80 |
| Petroleum resin | 3-8 |
| Dye | 2-5 |
| Zinc isopropyl xanthate | 2-6 |
| Zinc salt of 2-mercaptobenzothiazol | 2-6 |
| Zinc oxide | 3-5 |
| Sulphur | 1-5 |
| Divinyl benzene | 1-3 |
| Phenol-based antioxidant | 0.5-2 |
| Stearic acid | 0.5-2. |

7. An elastomer as claimed in claim 6 which comprises the following components:

| Component | Parts by Weight |
|---|---|
| Liquid polyisoprene rubber (LIB-30) | 100.0 |
| Calcium carbonate | 48.0 |
| Petroleum plasticizer | 50.0 |
| Petroleum resin | 5.0 |
| Dye | 3.0 |
| Zinc isopropyl xanthate | 3.5 |
| Zinc salt of 2-mercaptobenzothiazol | 2.5 |
| Sulphur | 0.9 |
| Divinyl benzene | 1.0 |
| Phenol-based antioxidant | 1.0 |
| Stearic acid | 1.0 |

8. An insole or midsole component for footwear which has been made of an elastomer as claimed in any preceding claim.

9. An article of footwear which has an insole or midsole component which has been made of an elastomer as claimed in any of claims 1 to 7.

**Patentansprüche**

1. Polyisopren-Elastomer, in dem das enthaltene Polyisopren ein durchschnittliches Molekulargewicht von 15 000 bis 70 000 aufweist, und in dem das Polyisopren mit einem Vernetzungsmittel einer ungesättigten aromatischen Verbindung vernetzt und mit einem Schwefelhärtungssystem oder einem Peroxidhärtungssystem gehärtet worden ist, wobei das resultierende Elastomer einen geringen Druckverformungsrest von 0 bis 5 % und einen geringe Eindrucktiefe, gemessen nach der Shore-A-Skala, von 0 bis 20 besitzt.

2. Elastomer nach Anspruch 1, in dem das Polyisopren ein durchschnittliches Molekulargewicht von 25 000 bis 50 000 besitzt.

3. Elastomer nach Anspruch 1 oder Anspruch 2, in dem die ungesättigte aromatische Verbindung eine aromatische Alkenylverbindung ist.

4. Elastomer nach Anspruch 3, in dem die ungesättigte aromatische Verbindung eine Divinylverbindung ist.

5. Elastomer nach Anspruch 4, in dem die ungesättigte aromatische Verbindung Divinylbenzol ist.

6. Elastomer nach mindestens einem der vorhergehenden Ansprüche, welches die folgenden Komponenten enthält:

| Komponente | Gewichtsteile |
|---|---|
| Flüssiger Polyisoprenkautschuk | 100 |
| Füllstoff | 40 - 80 |
| Petroleum- bzw. Erdöl-Weichmacher | 40 - 80 |
| Petroleum-Harz | 3 - 8 |
| Farbstoff | 2 - 5 |
| Zinkisopropylxanthat | 2 - 6 |
| Zinksalz von 2-Mercaptobenzothiazol | 2 - 6 |
| Zinkoxid | 3 - 5 |
| Schwefel | 1 - 5 |
| Divinylbenzol | 1 - 3 |
| Antioxidationsmittel auf Phenol-Basis | 0,5 - 2 |
| Stearinsäure | 0,5 - 2 |

7. Elastomer nach Anspruch 6, welches die folgenden Komponenten enthält:

| Komponente | Gewichtsteile |
|---|---|
| Flüssiger Polyisoprenkautschuk (LIB-30) | 100 |
| Calciumcarbonat | 48,0 |
| Petroleum-Weichmacher | 50,0 |
| Petroleum-Harz | 5,0 |
| Farbstoff | 3,0 |
| Zinkisopropylxanthat | 3,5 |
| Zinksalz von 2-Mercaptobenzothiazol | 2,5 |
| Schwefel | 0,9 |
| Divinylbenzol | 1,0 |
| Antioxidationsmittel auf Phenol-Basis | 1,0 |
| Stearinsäure | 1,0 |

8. Innensohlen- bzw. Einlegesohlen oder Mittelsohlenkomponente für Schuhwerk, welches aus einem Elastomer nach mindestens einem der vorhergehenden Ansprüche hergestellt worden ist.

9. Schuhwerkartikel, welcher eine Innensohlen- oder Mittelsohlenkomponente, die aus einem Elastomer nach mindestens einem der Ansprüche 1 bis 7 hergestellt worden ist, aufweist.

**Revendications**

1. Elastomère de polyisoprène dans lequel la teneur en polyisoprène présente un poids moléculaire moyen compris entre 15.000 et 70.000 et dans lequel les polyisoprène a été réticulé avec un composé de réticulation aromatique non saturé et polymérisé avec un système de polymérisation au soufre ou un système de polymérisation au peroxyde, l'élastomère résultant présentant une faible déformation permanente comprise entre 0 et 5% et une faible dureté comprise entre 0 et 20 quand elle est mesurée sur l'échelle Shore A.

2. Elastomère selon la revendication 1, dans lequel le polyisoprène a un poids moléculaire moyen compris entre 25.000 et 50.000

3. Elastomère selon la revendication 1 ou la revendication 2, dans lequel le composé aromatique non saturé est un composé alcényle aromatique.

4. Elastomère selon la revendication 3, dans lequel le composé aromatique non saturé est un composé de divinyle.

5. Elastomère selon la revendication 4, dans lequel le composé aromatique non saturé est du divinylbenzène.

6. Elastomère selon l'une quelconque des revendications précédentes, qui comprend les composants suivants:

| Composant | Parties en poids |
|---|---|
| Caoutchouc polyisoprène liquide | 100 |
| Charge | 40-80 |
| Plastifiant au pétrole | 40-80 |
| Résine de pétrole | 3-8 |
| Teinture | 2-5 |
| Xanthate isopropylique de zinc | 2-6 |
| Sel de zinc de 2-mercaptobenzothiazole | 2-6 |
| Oxyde de zinc | 3-5 |
| Soufre | 1-5 |
| Benzène divinylique | 1-3 |
| Antioxydant à base de phénol | 0,5-2 |
| Acide stéarique | 0,5-2 |

7. Elastomère selon la revendication 6, qui comprend les composants suivants :

| Composant | Parties en poids |
|---|---|
| Caoutchouc polyisoprène liquide (LIB-30) | 100,0 |
| Carbonate de calcium | 48,0 |
| Plastifiant au pétrole | 50,0 |
| Résine de pétrole | 5,0 |
| Teinture | 3,0 |
| Xanthate isopropylique de zinc | 3,5 |
| Sel de zinc de 2-mercaptobenzothiazol | 2,5 |
| Soufre | 0,9 |
| Benzène divinylique | 1,0 |
| Antioxydant à base de phénol | 1,0 |
| Acide stéarique | 1,0 |

8. Première ou semelle intermédiaire constituant le composant d'un article chaussant qui a été réalisé en un élastomère selon l'une quelconque des revendications précédentes.

9. Article chaussant qui comprend un composant constitué par une première ou une semelle intermédiaire qui a été réalisé en un élastomère selon l'une quelconque des revendications 1 à 7.

Fig. 1A

Fig. 1B

Fig 2

40

Fig 3

- 42 -

50

46

48

44

66

64

68

60

Fig. 4

62

66

Fig. 5

66

64

62

68